Europäisches Patentamt

European Patent Office

Office européen des brevets

(11) Veröffentlichungsnummer: **0 416 303 A2**

# EUROPÄISCHE PATENTANMELDUNG

(21) Anmeldenummer: 90115221.5

(22) Anmeldetag: 08.08.90

(51) Int. Cl.5: **B60N 2/02**, E05F 15/16

(30) Priorität: **05.09.89 DE 3929424**

(43) Veröffentlichungstag der Anmeldung:
**13.03.91 Patentblatt 91/11**

(84) Benannte Vertragsstaaten:
**DE ES FR GB SE**

(71) Anmelder: **Brose Fahrzeugteile GmbH & Co. KG**
**Ketschendorfer Strasse 38-48**
**W-8630 Coburg(DE)**

(72) Erfinder: **Neuhauser, Werner**
**Am Wasserturm 7**
**W-8636 Weitramsdorf(DE)**
Erfinder: **Rampel, Hans**
**Anlage 12**
**W-8631 Ahorn, OT Schorkendorf(DE)**
Erfinder: **Fischer, Markus**
**Pilgramsroth 132**
**W-8630 Coburg(DE)**

(74) Vertreter: **Pretzell, Hellmut, Dipl.-Ing.**
**Brose Fahrzeugteile GmbH & Co.**
**Kommanditgesellschaft Patentabteilung**
**Postfach 1353**
**W-8630 Coburg(DE)**

(54) Verstellvorrichtung für Kraftfahrzeuge.

(57) Verstellvorrichtung, insbesondere für Sitzverstelleinrichtungen, Scheibenheber und dgl. in Kraftfahrzeugen mit einem Ritzel 2, dessen Verzahnung 20 formschlüssig in ein bogenförmiges oder geradliniges, aus mindestens zwei Zahnstangen 3, 4 zusammengesetztes Zahnstangenpaket eingreifen. Die Zahnstangen 3, 4 und das Ritzel 2 weisen eine übereinstimmende Zahnteilung auf und die Zahnstangen 3, 4 sind horizontal und/oder vertikal bzw. radial gegeneinander versetzt.

*FIG.2*

EP 0 416 303 A2

## VERSTELLVORRICHTUNG FÜR KRAFTFAHRZEUGE

Die Erfindung betrifft eine Verstellvorrichtung für Kraftfahrzeuge nach dem Oberbegriff des Anspruchs 1. Bei elektromotorisch angetriebenen Verstellvorrichtungen, bspw. für Sitzverstelleinrichtungen und elektrische Scheibenheber in Kraftfahrzeugen, muß gewährleistet sein, daß das mit einem Getriebeteil der Verstellvorrichtung verbundene, elektromotorisch angetrieben Ritzel und die mit dem anderen Getriebeteil der Verstellvorrichtung verbundene bogenförmige oder geradlinige Zahnstange über den gesamten Verstellbereich der Verstellvorrichtung ausreichend tief ineinandergreifen, um einen möglichst spielfreien Eingriff der aufeinander gerichteten Eingriffsflanken des Ritzels und der Zahnstange zu gewährleisten. Dieser Eingriff soll einerseits nicht zu flach, er darf aber auch nicht zu stark sein. Um dabei eine spielfreie Übertragung der Antriebskräfte vom Ritzel auf die Zahnstange sicherzustellen, muß mindestens ein Zahn des Ritzels beidseitig an Zahnflanken der Zahnstange anliegen, was nur bei einem ausreichend tiefen Eingriff der Zähne möglich ist, was aber zur Gefahr des Verklemmens der Verstellvorrichtung führt. Bei einem weniger tiefen Eingriff der Verzahnung des Ritzels in die Verzahnung der Zahnstange treten jedoch bei der Verstellung Rütteleffekte, Vibrationen und Klappereffekte auf. Zum Erzielen eines ausreichend tiefen Eingriffs der Verzahnung des Ritzels in die Zahnstangenverzahnung ist es aus der DE-OS 35 01 442 bekannt, die Zahnstange in vertikaler Richtung auf das Ritzel durch eine Feder oder durch die Eigenelastizität der Zahnstange vorzubelasten und dadurch ein nicht zu starkes und nicht zu geringes Eingreifen zwischen Ritzel und Zahnstange über den gesamten Verstellweg zu erreichen. Diese Verstellvorrichtung macht jedoch eine verhältnismäßig komplizierte Montage erforderlich, bei der die feder elastische oder durch eine Feder belastete Zahnstange über eine Spezialvorrichtung entgegen der Federwirkung niedergehalten werden muß, um den Eingriff mit der Verzahnung des Ritzels herzustellen. Ein weiterer Nachteil besteht darin, daß bei einer eigenelastischen Zahnstange über die gesamte Verzahnungslänge nicht die gleiche Federkraft aufgebracht werden kann, so daß in Teilbereichen der Zahnstange ein ungenügender Eingriff zwischen der Ritzelverzahnung und der Zahnstangenverzahnung gegeben ist, was wiederum zu Klappergeräuschen und Vibrationen bei der Verstellung führt bzw. bei einer zu starken Eigenelastizität der Zahnstange die Gefahr des Verklemmens der Verstellvorrichtung mit sich bringt. Wird die Zahnstange mittels Federelemente, die zwischen der karosseriefesten Basis und der Zahnstange angeordnet sind, von unten angefedert, so müssen mindestens zwei Federelemente vorhanden sein und die notwendige Vorspannkraft dieser Federelemente bereits bei der Montage der Zahnstangen überwunden werden. Ein weiterer wesentlicher Nachteil der bekannten Verstellvorrichtung besteht darin, daß mit zunehmender Betriebsdauer auch der Verschleiß der ineinanderklemmenden Zähne zunimmt und bei einer entsprechend starken Abnutzung der Zahnflanken die Stirnseiten der Zahnreihen aufeinanderstoßen, so daß trotz der federbelasteten Vorspannung ein Flankenspiel unvermeidlich ist, was zu den unerwünschten Klappergeräuschen und Vibrationen führt. Aus der DE-PS 25 44 174 ist ein Stellgetriebe für Scheibenheber, Sitzverstellungen und dgl. in Kraftfahrzeugen bekannt, bei dem die Verzahnung eines Ritzels in die Verzahnung eines Zahnbogens eingreift, wobei der Zahnbogen mehrere sich nebeneinander erstreckende und gegeneinander teilungsversetzte Zahnreihen und das Ritzel mehrere, den teilungsversetzten Zahnreihen zugeordnete, ebenfalls gegeneinander teilungsversetzte Zahnungsbereiche umfaßt. Dadurch wird erreicht, daß die in den Übergangsbereichen des Zusammenwirkens eines Zahnpaares zum nächsten Zahnpaar einer Zahnradgruppe anfallenden Unstetigkeiten dadurch unschädlich gemacht werden, daß während dieser Übergangsphase die nebengeschaltete Zahnradgruppe die Umfangskraft stoßfrei überträgt. Dadurch wird ein stetiger Gang der Verstellvorrichtung angestrebt, wobei die Kraftübertragung jeweils zwischen den beiden teilungsversetzt parallelgeschalteten Zahnradgruppen wechselt. Bei dieser bekannten Verstellvorrichtung ist jedoch eine sehr exakte Montage und Justage erforderlich, um einen spielfreien Eingriff der Verzahnungen über den gesamten Verstellweg zu gewährleisten. Infolge der unvermeidlichen Abnutzung der Zahnflanken bei längerer Betriebsdauer tritt jedoch auch bei den teilungsversetzten Zahngruppen ein seitliches Flankenspiel auf, das wiederum zu den unerwünschten Klappergeräuschen und Vibrationen im Stillstand bzw. im Betrieb der Verstellvorrichtung führt. Der vorliegenden Erfindung liegt daher die Aufgabenstellung zugrunde, eine Verstellvorrichtung der eingangs genannten Gattung zu schaffen, die einen spielfreien Eingriff der einander gegenüberstehenden Verzahnungen ohne die Gefahr des Verklemmens der Verstellvorrichtung gewährleistet, diesen spielfreien Eingriff auch nach langer Betriebsdauer sicherstellt und die eine geringe Montagezeit sowie geringe Montagekosten verursacht. Diese Aufgabe wird durch das kennzeichnende Merkmal des Anspruchs 1 gelöst. Die erfindungsgemäße Lösung gewährleistet einen spielfreien Eingriff zwischen Ritzel und Zahnstange, ohne daß die Gefahr eines Verklemmens zwischen Ritzel und Zahnstange besteht. Der spielfreie Eingriff ist auch nach langem Betrieb und einer Vielzahl von Verstellbewegungen sichergestellt, da infolge der zueinander versetzten Anordnung der einzelnen Zahnstangen des Zahnstangenpakets eine ausreichende Nachstellung bewirkt wird. Zugleich ist eine einfache Montage gewährleistet, bei der es nicht erforderlich ist, eine Federkraft zu überwinden. Damit werden wirksam Klappergeräusche und Vibrationen im Stillstand und bei der Durchführung von Verstellbewegungen vermieden. Eine vorteilhafte Weiterbildung der erfindungsgemäßen Lösung ist dadurch gekennzeichnet, daß die Zahnstangen federelastisch gegeneinander versetzt und gegeneinander gleitend miteinander verbunden sind. Durch den Einsatz einer Feder wird ein wirksamer Versatz der Zahnstangen eines Zahnstangenpakets herbeigeführt, so daß auch nach langem Gebrauch ein spielfreier Eingriff aufgrund der Nachstellwirkung der federbelasteten Zahnstangen sichergestellt ist. Zusätzlich wird der Verschleiß der ineinandergreifenden Verzahnungen deutlich verringert, da das Abrollen der Ritzelverzahnung in der Zahnstangenverzahnung infolge der Federwirkung gedämpft wird. Eine weitere vorteilhafte Ausgestaltung der erfindungsgemäßen Lösung ist dadurch gekennzeichnet, daß eine feste Zahnstange mit einer karosseriefesten Basis und mindestens eine bewegliche Zahnstange über mindestens eine Feder mit der festen Zahnstange verbunden ist. Durch diese Weiterbildung der erfindungsgemäßen Lösung ist es möglich, die hauptsächlich tragende Zahnschiene festzulegen und die dadurch notwendigen größeren Toleranzen zur Ritzelverzahnung durch die federnden Zahnstangen aufzufangen. Im fertigmontierten Zustand liegt die fest montierte Zahnstange dabei bspw. an der linken Zahnflanke eines in Eingriff befindlichen Ritzelzahns an, während die bewegliche, federelastisch gegenüber der fest montierten Zahnstange abgestützte Zahnstange an der rechten Zahnflanke des in Eingriff befindlichen Ritzelzahns anliegt. Dadurch, daß sicher gewährleistet ist, daß eine Zahnflanke der fest montierten Zahnstange am Ritzel anliegt, ist die Verzahnung in dieser Richtung auch objektiv spielfrei, während die andere Richtung subjektiv spielfrei ist, da die Federkraft zur Abstützung der gefederten Zahnstange überwunden werden muß. Eine weitere vorteilhafte Ausgestaltung der erfindungsgemäßen Lösung ist dadurch gekennzeichnet, daß die bewegli che Zahnstange in horizontaler Richtung federnd an der festen Zahnstange abgestützt ist. Diese Weiterbildung der erfindungsgemäßen Lösung ermöglicht es, die Federung nach der kompletten Montage der Verstellvorrichtung anzubringen, so daß auch nachträgliche Montagen und eine leichte Demontage sowie ein leichtes Austauschen einzelner Elemente möglich ist. Eine weitere vorteilhafte Ausgestaltung ist dadurch gekennzeichnet, daß mindestens eine Zahnstange in vertikaler Richtung federnd an einer karosseriefesten Basis abgestützt ist. Die Kombination aus horizontaler und vertikaler Abstützung ergibt eine verstärkte Wirkung hinsichtlich des spielfreien Eingriffs der ineinandergreifenden Verzahnungen. Eine vorteilhafte Ausgestaltung der erfindungsgemäßen Lösung ist dadurch gekennzeichnet, daß die Zahnstangen über ein Federblech miteinander verbunden sind. Bei dieser Ausgestaltung der erfindungsgemäßen Lösung besteht die Möglichkeit, das Federblech erst zu montieren, wenn die Verstellvorrichtung schon komplett zusammengebaut ist, wobei nur ein Federblech je Zahnstangenpaket erforderlich ist. Diese Ausgestaltung der erfindungsgemäßen Lösung stellt darüberhinaus sicher, daß die Federkraft über die gesamte Verzahnungslänge gleich ist, so daß ein Spiel in einer Richtung auch objektiv nicht mehr vorhanden ist. Durch die relativ freie Gestaltung des Federblechs kann der jeweils vorhandene Bauraum optimal genutzt werden, so daß sich ein insgesamt geringer Platzbedarf ergibt. Eine vorteilhafte Weiterbildung der vorstehend genannten Lösung ist dadurch gekennzeichnet, daß ein abgewinkeltes Ende des Federbleches an einer Außenkante der festen Zahnstange anliegt, die bewegliche Zahnstange umgreift und mit seinem anderen Ende in einer Aussparung der beweglichen Zahnstange eingreift, wobei vorzugsweise das Federblech einen Federschenkel aufweist, der eine Außenkante der beweglichen Zahnstange umgreift und im montierten Zustand des Federblechs zwischen einer horizontalen und vertikalen Endlage in Bezug auf die Längserstreckung der Zahnstangen angeordnet ist. Dabei weist die bewegliche Zahnstange vorzugsweise eine T-förmige Ausnehmung auf, in die das zweifach abgewinkelte, der Ausnehmung angepaßte Ende des Federblechs eingreift. Bei dieser Ausgestaltung der erfindungsgemäßen Lösung wird eine Zahnstange des Zahnstangenpakets nicht senkrecht sondern parallel zur Zahnstange angefedert. Das als Federelement dienende speziell geformte Federblech wird nur durch die eigene Federkraft in einem T-förmigen Ausschnitt der beweglichen Zahnstange gehalten. Die Federkraft zum Spielausgleich wird durch die beiden abgewinkelten Enden, die nach der Montage auch im T-förmigen Ausschnitt der beweglichen Zahnstange angreifen, aufgebracht. Der andere, abgewinkelte Schenkel des Federblechs stützt sich dabei an der Seite der fest montierten Zahnstange ab. Weitere vorteilhafte Ausgestaltungen und Weiterbildungen der Erfindung sind in den Unteransprüchen gekennzeichnet. Die Erfindung wird nachstehend an Hand der in der Zeichnung dargestellten Ausführungsbeispiele näher erläutert.

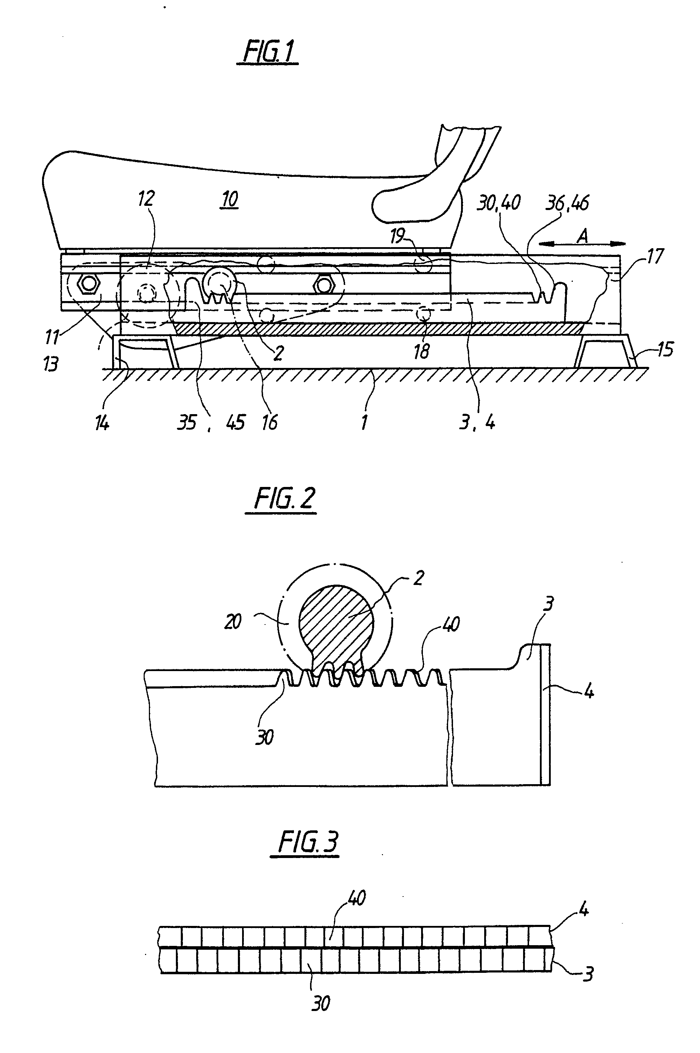

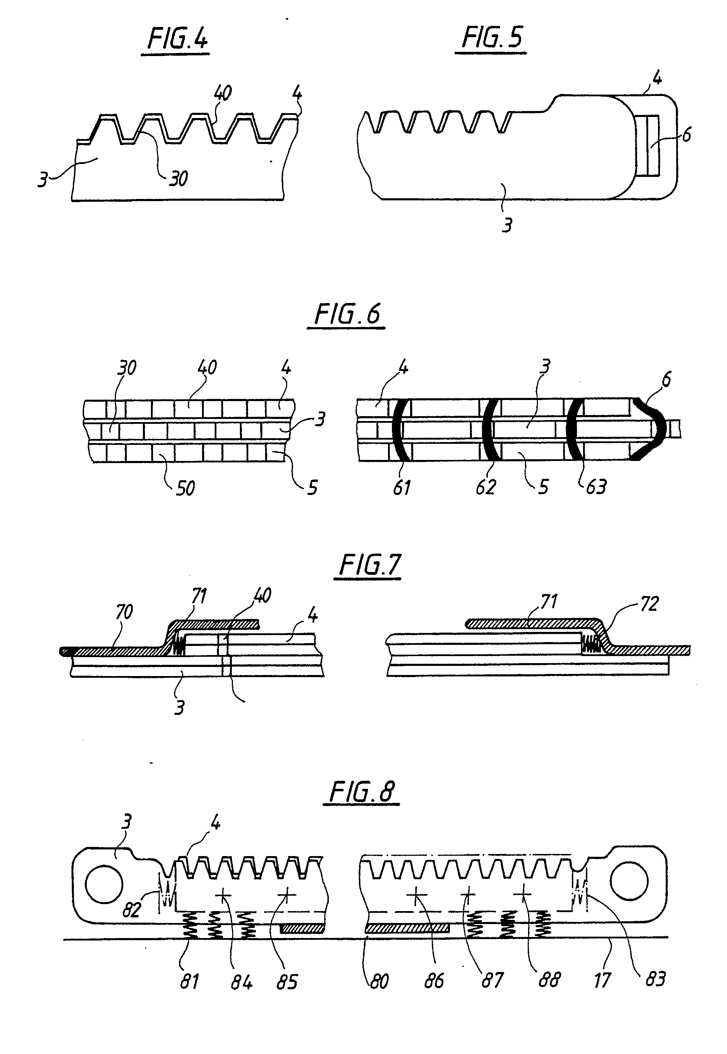

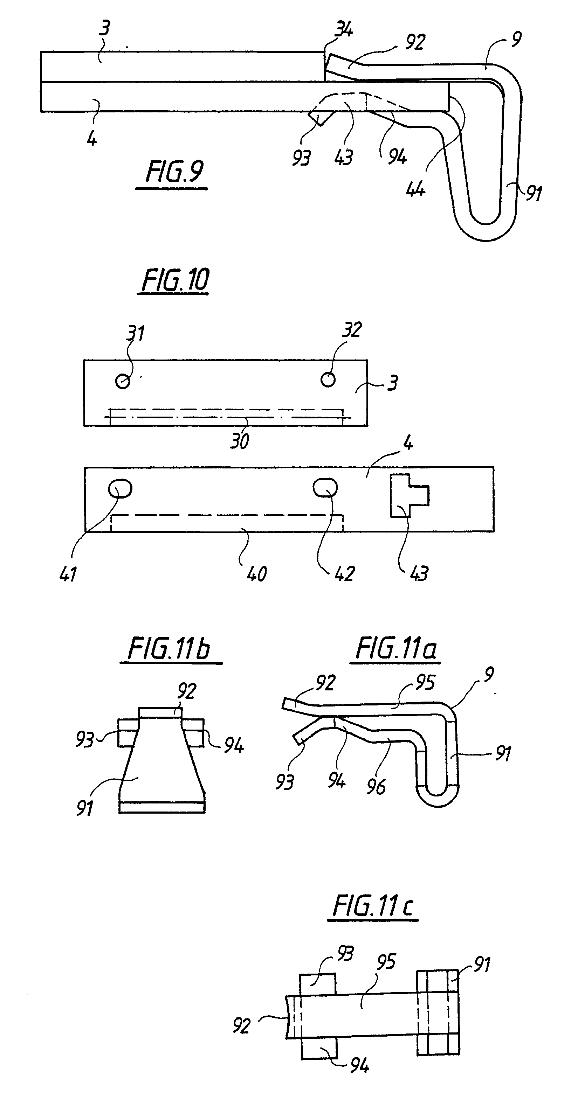

Es zeigen: Figur 1 eine teilweise geschnittene Seitenansicht einer Längsverstelleinrichtung für Kraftfahrzeugsitze; Figur 2 einen Ausschnitt aus der Längsverstellvorrichtung für Kraftfahrzeugsitze mit einem Ritzel und einem Zahnstangenpaket; Figur 3 eine Draufsicht auf das Zahnstangenpaket gemäß Figur 2; Figur 4 eine Seitenansicht eines in vertikaler Richtung abgefederten Zahnstangenpakets; Figur 5 eine Seitenansicht eines aus drei Zahnstangen zusammengesetzten Zahnstangenpakets mit stirnseitiger Abfederung; Figur 6 eine Draufsicht auf ein Zahnstangenpaket mit drei gegeneinander abgefederten Zahnstangen; Figur 7 eine Draufsicht auf zwei gegeneinander abgefederte Zahnstangen mit einem Trägerblech; Figur 8 eine Seitenansicht eines vertikal und horizontal federnd abgestützten Zahnstangenpakets; Figur 9 eine Draufsicht auf ein Zahnstangenpaket mit einem Federblech als Federelement; Figur 10 eine Seitenansicht der Zahnstangen eines Zahnstangenpakets zur Verbindung mit einem Federblech und Figur 11 eine detaillierte Darstellung eines Federblechs in verschiedenen Ansichten. Die in Figur 1 dargestellte, teilweise geschnittene Seitenansicht einer Längsverstellvorrichtung für einen Kraftfahrzeugsitz zeigt eine Bodenschiene 17, die im vorderen Bereich mit einer Konsole 14 und im hinteren Bereich mit einer Konsole 15 fest verbunden ist, die Teil einer karosseriefesten Basis 1 sind. Die Bodenschiene 17 ist mit einem Zahnstangenpaket 3, 4 so verbunden, daß das Zahnstangenpaket 3, 4 in der durch den Pfeil A dargestellten Verschieberichtung nicht gegenüber der Bodenschiene 17 bewegbar ist. Die Bodenschiene 17 bildet mit einer Sitzschiene 11 eine Längsführung, wobei die Sitzschiene 11 mit einem Kraftfahrzeugsitz 10 verbunden ist, der in Längsrichtung stufenlos zwischen der in Figur 1 dargestellten vordersten Stellung und einer hintersten Stellung verstellt werden kann. Zur Erleichterung der Verstellung dienen Rollen oder Kugellager 18, 19, die zwischen Bodenschiene 17 und Sitzschiene 11 angeordnet sind. Die Längsverstellvorrichtung besteht in dem in Figur 1 dargestellten Ausführungsbeispiel aus einem Antriebsmotor 12, der über eine Welle 16 ein Ritzel 2 antreibt. Die Verzahnung des Ritzels 2 greift in die Verzahnung 30, 40 des Zahnstangenpakets 3, 4 ein, so daß bei einer Drehbewegung des Antriebsmotors 12 der Kraftfahrzeugsitz 10 über die mit ihm verbundene Sitzschiene 11 in Längsrichtung, d.h. in Richtung des Pfeiles A in der einen oder anderen Richtung verstellt werden kann. Die Verstellung des Kraftfahrzeugsitzes 10 wird durch einen vorderen Anschlag 35, 45 des Zahnstangenpakets sowie einen hinteren Anschlag 36, 46 begrenzt, so daß die hinterste Stellung der in Figur 1 dargestellten Sitzverstellvorrichtung dann gegeben ist, wenn das Ritzel 2 am hinteren Anschlag 36, 46 anschlägt. Figur 2 zeigt eine detaillierte Seitenansicht der aus einem Ritzel 2 und einem Zahnstangenpaket 3, 4 bestehenden Verstelleinrichtung und Figur 3 eine Draufsicht auf das Zahnstangenpaket 3, 4 gemäß Figur 2. Wie insbesondere die in Figur 2 dargestellte (schematische Seitenansicht verdeutlicht, sind die Verzahnungen 30, 40 der das Zahnstangenpaket bildenden Zahnstangen 3, 4 in horizontaler Richtung gegeneinander versetzt, weisen aber ansonsten die gleiche Teilung auf wie auch die Verzahnung 20 des Ritzels 2. Infolge der versetzten Anordnung der Verzahnungen 30, 40 der Zahnstangen 3, 4 greift die Verzahnung 20 des Ritzels 2 spielfrei in die Verzahnungen 30, 40 ein, ohne daß der Eingriff zu stark ist und damit die Gefahr eines Blockierens der Verstellvorrichtung bewirkt. Wie in den nachfolgenden Ausführungsbeispielen dargelegt wird, ist insbesondere bei einer federnden Lagerung der Zahnstangen 3, 4 gegeneinander in horizontaler Richtung ein spielfreier Eingriff auch über eine lange Zeitdauer gewährleistet, da die gegenseitige Abfederung der Verzahnungen 30, 40 der Zahnstangen 3, 4 einen "Nachstell-Effekt" bewirkt. Dabei ist die Federkraft über die gesamte Verzahnungslänge gleichmäßig ausgebildet, so daß keine unterschiedlichen Eingriffe der Verzahnung 20 des Ritzels 2 in die Verzahnungen 30, 40 der Zahnstange 3, 4 erfolgen. Figur 4 zeigt in einer schematischen Seitenansicht einen vertikalen Versatz zweier Zahnstangen 3, 4, der allein oder zusätzlich zu einem horizontalen Versatz der Zahnstangen 3, 4 entsprechend den Figuren 2 und 3 vorgesehen werden kann. Bei einem zusätzlichen vertikalen Versatz wird die Eingriffswirkung der Verzahnung 20 des Ritzels 2 in die Zahnstangenverzahnungen verstärkt, wobei die vertikale Abfederung bzw. der vertikale Versatz geringfügiger ausgebildet sein kann als der horizontale Versatz bzw. die horizontale Abfederung der Zahnstangen 3, 4 gegeneinander. Figur 5 zeigt eine Seitenansicht und Figur 6 eine Draufsicht auf ein Zahnstangenpaket mit drei Zahnstangen 3, 4, 5, die gleitend miteinander verbunden und in horizontaler Richtung gegeneinander versetzt sind. Der horizontale Versatz wird wahlweise durch einzelne Federelemente 61, 62, 63 in Form von Blattfederelementen herbeigeführt, die in zueinander fluchtenden Ausnehmungen in den Federstangen 3, 4, 5 vorgesehen sind. Alternativ hierzu kann an den Enden der Zahnstangen 3, 4, 5 eine bzw. zwei Blattfedern 6 angeordnet werden, die durch eine Ausnehmung in der mittleren Zahnstange 3 gelagert ist und mit ihren Enden an den Stirnseiten der zu beiden Seiten der mittleren Zahnstange 3 angeordneten Zahnstangen 4, 5 anliegt und diese federnd gegenüber der mittleren Zahnstange 3 abstützt. Wie der linke Teil der Darstellung gemäß Figur 6 zeigt, wird durch die Blattfederelemente 61, 62, 63 oder die stirnseitig angeordnete Blattfeder 6 ein seitlicher Versatz der Verzahnungen 30, 40, 50 der Zahnstangen 3, 4, 5 bewirkt, durch den ein spielfreier Eingriff des mit gleicher Teilung versehenen Ritzels gewährleistet wird. Von den drei Zahnstangen 3, 4, 5 des Zahnstangenpakets ist die mittlere Zahnstange 3 karosseriefest mit der Basis des Kraftfahrzeugs verbunden, während die beiden seitlich an der festen Zahnstange 3 anliegenden und mit dieser in horizontaler Richtung gleitend verbundenen Zahnstangen 4, 5 federbelastet an der festen Zahnstange 3 abgestützt und somit in horizontaler Richtung beweglich sind. Bei dieser Verstellvorrichtung ist ein symmetrischer Eingriff der Ritzelverzahnung in die Verzahnung des Zahnstangenpakets gewährleistet, da die beiden äußeren Zahnstangen federbelastet sind, während die mittlere Zahnstange objektiv spielfrei an den Zahnflanken des Ritzels anliegt. Die jeweils andere Zahnflanke der Ritzelverzahnung liegt an der Verzahnung 40, 50 der beweglichen Zahnstangen 4, 5 an und bewirkt somit einen subjektiv spielfreien Eingriff in die Verzahnung des Zahnstangenpakets. Zusätzlich zu dem horizontalen, federbelasteten Versatz der beiden äußeren beweglichen Zahnstangen 4, 5 kann ein vertikaler Versatz vorgesehen werden, bei dem Federelemente an der Unterkante der beweglichen Zahnstangen 4, 5 angreifen und somit einen vertikalen Versatz der äußeren beweglichen Zahnstangen 4, 5 gegenüber der karosseriefesten Zahnstange 3 bewirken. Die gegenseitige Führung und Verbindung der beweglichen Zahnstangen 4, 5 mit der festen Zahnstange 3 kann über entsprechende Langlöcher bzw. bei einem vertikalen und horizontalen Versatz über eine entsprechend vergrößerte Bohrung in den beweglichen Zahnstangen 4, 5 erfolgen. In Figur 7 ist eine Variante des federbelasteten Versatzes einer beweglichen Zahnstange gegenüber einer karosseriefesten Zahnstange dargestellt. In dieser Ausführungsform ist die karosseriefeste Zahnstange 3 fest mit einem Trägerblech 70 verbunden, das seitlich an der beweglichen Zahnstange 4 anliegt. Zwischen dem abgewinkelten Trägerblech 70 und mindestens einer Stirnseite der beweglichen Zahnstange 4 ist ein Federelement 71 bzw. 72 zur horizontalen Verschiebung der beweglichen Zahnstange 4 gegenüber der festen Zahnstange 3 vorgesehen, was einen Versatz der Verzahnung 40 der beweglichen Zahnstange 4 gegenüber der Verzahnung 30 der festen Zahnstange 3 in horizontaler Richtung bewirkt. Das Federelement 71, 72 kann aus einer Kunststoffeder oder einem Metallfederelement bestehen. Wie in den vorstehend beschriebenen Ausführungsbeispielen können die Zahnstangen 3, 4 teilweise lose miteinander vernietet werden, um gemeinsam Längskräfte aufzunehmen, die bspw. bei einem Verfahren der Verstelleinrichtung gegen die Endanschläge oder bei einem Aufprall auftreten können, bei dem die Sitzverstellvorrichtung in hohem Maße beansprucht wird. Figur 8 zeigt eine Seitenansicht eines Zahnstangenpakets mit horizontal und vertikal zueinander versetzten Zahnstangen. In dieser Ausführungsform sind die beiden Zahnstangen 3, 4 über an den Stirnseiten angeordneten Federelementen 82, 83 federnd gegeneinander abgestützt und zusätzliche Federelemente 81 sind zwischen der Bodenschiene 17 und der einen beweglichen Zahnstange 4 angeordnet, so daß die Verzahnung der Zahnstange 4 zum einen in horizonaler Richtung und zum anderen in vertikaler Richtung gegenüber der Verzahnung der festen Zahnstange 3 versetzt wird und damit einen zusätzlichen spielreduzierenden Eingriff der Verzahnung des Ritzels erzielt. Zur Unterstützung der Zahnstangen ist ein Trägerblech 80 vorgesehen. Die zwischen der Bodenschiene 17 und der beweglichen Zahnstange 4 angeordneten Federelemente 81 können aus Gummifederelementen oder Metallfederelementen bestehen. Zusätzlich kann auch die an sich feste Zahnstange 3 gegenüber der Bodenschiene 17 federnd abgestützt sein, so daß nur ein horizontaler Versatz der Verzahnung der beweglichen Zahnstange 4 gegenüber der "festen" Zahnstange 3 gegeben ist, während in vertikaler Richtung beide Zahnstangen 3, 4 vertikal federnd gegenüber der Bodenschiene 17 abgestützt sind und somit einen verstärkten Eingriff der Verzahnung beider Zahnstangen 3, 4 in die Ritzelverzahnung mit sich bringen. An den Verbindungsstellen 84, 85, 86, 87, 88 können beide Zahnstangen 3, 4 lose miteinander vernietet werden, um gemeinsam Längskräfte aufzunehmen. Figur 9 zeigt in Draufsicht eine spezielle Variante eines Zahnstangenpakets mit einer gegenüber einer festen Zahnstange 3 federnd abgestützten beweglichen Zahnstange 4. Bei dieser Ausführungsform wird somit gegenüber dem Stand der Technik eine Zahnstange, nämlich die bewegliche Zahnstange 4 des Zahnstangenpakets nicht senkrecht sondern parallel zur festen, d.h. mit der Bodenschiene 17 gemäß Figur 1 verbundenen Zahnstange 3 angefedert. Als Federelement dient ein speziell geformtes Federblech 9, dessen detaillierter Aufbau in Figur 11 dargestellt ist. Das Federblech 9 greift mit seinem einen abgewinkelten Ende an der Stirnseite 34 der festen Zahnstange 3 an und liegt mit seinem anderen Ende 93, 94 in einer T-förmigen Ausnehmung 43 in der beweglichen Zahnstange 4 und umgreift mit seinem Federschenkel 91 die Stirnseite 44 der beweglichen Zahnstange 4. Dabei wird das Federblech 9 nur durch die eigene Federkraft in dem T-förmigen Ausschnitt 43 der beweglichen Zahnstange 4 gehalten. Die Federkraft zum Spielausgleich wird durch die beiden abgewinkelten Teile 93, 94 des einen Endes des Federblechs 9, die nach der Montage im T-förmigen Ausschnitt 43 der beweglichen Zahnstange 4 angreifen, aufgebracht. Im fertig montierten Zustand liegt die fest montierte Zahnstange 3 dann an der z. B. linken Zahnflanke der Verzahnung des nicht näher dargestellten Ritzels an, während die gegenüber der Verzahnung der fest montierten Zahnstange 3 horizontal versetzte Verzahnung der beweglichen Zahnstange 4 an der jeweils rechten Zahnflanke der Ritzelverzahnung anliegt. Dadurch wird gewährleistet, daß eine Zahnflanke der fest montierten Zahnstange 3 an der Ritzelverzahnung anliegt, so daß die Verzahnung in dieser Richtung objektiv spielfrei ist. In der anderen Richtung ist ein subjektiv spielfreier Eingriff der Ritzelverzahnung in die Verzahnung der beweglichen Zahnstange 4 gegeben, da die Federkraft des Federblechs 9 überwunden werden muß. Figur 9 zeigt in seitlicher Einzelansicht die Konfigurationen der festen Zahnstange 3 sowie der beweglichen Zahnstange 4. Beide Zahnstangen 3, 4 sind mit teilungsgleichen Verzahnungen 30, 40 versehen, deren Teilung auch mit der Teilung der Ritzelverzahnung übereinstimmt. Durch Bohrungen 31, 32 der festen Zahnstange 3 sind Bolzen gesteckt, die in der beweglichen Zahnstange 4 in Langlöchern 41, 42 geführt sind, so daß ein horizontaler Versatz der beweglichen Zahnstange 4 gegenüber der festen Zahnstange 3 erfolgen kann. Zum Eingriff des zweifach abgewinkelten Endes 93, 94 des Federblechs 9 gemäß Figur 9 ist eine T-förmiger Ausschnitt 43 in der beweglichen Zahnstange 4 an deren einem Ende vorgesehen, in dem das entsprechend geformte, abgewinkelte Ende 93, 94 des Federblechs 9 zur Anlage kommt. Bei der Ausführungsform gemäß den Figuren 9 und 10 besteht die einfache Möglichkeit, das Federblech 9 erst zu montieren, wenn die gesamte Sitzverstellvorrichtung schon komplett zusammengebaut ist, wobei wahlweise eine horizontale Montage des Federblechs 9 oder eine vertikale Montage des Federblechs 9 erfolgen kann. Auch ist ein vertikaler Versatz der beweglichen Zahnstange 4 gegenüber der festen Zahnstange 3 möglich, ebenfalls verbunden mit der Möglichkeit einer nachträglichen Montage des Federblechs. Zum Versatz der Zahnstangen 3, 4 ist nur ein Federblech erforderlich, wobei gleichzeitig die Federkraft über die gesamte Verzahnungslänge gleichmäßig ausgebildet ist. Infolge der verhältnismäßig freien Gestaltungsmöglichkeit des Federblechs 9 kann der jeweils vorhandene Bauraum im Bereich der Sitzverstellvorrichtung optimal genutzt werden, so daß ein nur äußerst geringer Platzbedarf gegeben ist. Figur 11 zeigt in verschiedenen Ansichten den Aufbau eines Federblechs 9 für ein Zahnstangenpaket gemäß den Figuren 9 und 10. Die in Figur 11a dargestellte Seitenansicht des Federbleches 9 zeigt den detaillierten Aufbau dieses Federblechs, das aus einem Federschenkel 91 und zwei abgewinkelten Fe derenden 92 bzw. 93, 94 zusammengesetzt ist, die über Verbindungsschenkel 95, 96 mit dem Federschenkel 91 verbunden sind. Der in Seitenansicht U-förmige Federschenkel 91 ist gemäß Figur 11b trapezförmig ausgebildet und bewirkt die federnde Abstützung der Enden des Federbleches. Das in die T-förmige Aussparung 43 der beweglichen Zahnstange 4 gemäß Figur 10 eingreifende zweifach abgewinkelte Ende 93, 94 des Federbleches 9 ist entsprechend der in Figur 11c dargestellten Draufsicht auf das Federblech 9 ebenfalls T-förmig ausgebildet, so daß es der Konfiguration der Aussparung 43 der beweglichen Zahnstange 4 angepaßt ist. Abweichend von der in Figur 11 dargestellten Konfiguration des Federbleches 9 können beliebige Konfigurationen vorgesehen werden, je nach den vorhandenen Platzverhältnissen der Verstellvorrichtung und dem Aufbau der Verstellvorrichtung selbst. So kann bspw. bei einem aus drei Zahnstangen zusammengesetzten Zahnstangenpaket ein Federblech 9 vorgesehen werden, das zwei Federschenkel aufweist, die jeweils rechts und links von einer festen Zahnstange an entsprechende Ausnehmungen in beweglichen Zahnstangen eingreifen. Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Ansprüche**

1. Verstellvorrichtung, insbesondere für Sitzverstell-Seinrichtungen, Scheibenheber und dgl. in Kraftfahrzeugen mit einem Ritzel, dessen Zähne formschlüssig in ein bogenförmiges oder geradliniges, aus mindestens zwei Zahnstangen zusammengesetztes Zahnstangenpaket eingreifen, wobei die Zahnstangen und das Ritzel eine übereinstimmende Zahnteilung aufweisen, **dadurch gekennzeichnet,** daß die Zahnstangen (3, 4, 5) horizontal und/oder vertikal bzw. radial um weniger oder mehr als eine Zahnteilung gegeneinander versetzt angeordnet sind. 2. Verstellvorrichtung nach Anspruch 1 , **dadurch gekennzeichnet,** daß die Zahnstangen (3, 4, 5) federelastisch gegeneinander versetzt und gegeneinander gleitend miteinander verbunden sind. 3. Verstellvorrichtung nach Anspruch 2 , **dadurch gekennzeichnet,** daß eine feste Zahnstange (3) mit einer karosseriefesten Basis (1) und mindestens eine bewegliche Zahnstange (4, 5) über mindestens eine Feder (6; 61, 62, 63; 7; 8; 9) mit der festen Zahnstange (3) verbunden ist. 4. Verstellvorrichtung nach Anspruch 3 , **dadurch gekennzeichnet,** daß die bewegliche Zahnstange (4) in horizontaler Richtung federnd an der festen Zahnstange (3) abgestützt ist. 5. Verstellvorrichtung nach einem der vorangehenden Ansprüche, **dadurch gekennzeichnet,** daß mindestens eine Zahnstange (3, 4, 5) in vertikaler Richtung federnd an einer karosseriefesten Basis (1) abgestützt ist. 6. Verstellvorrichtung nach Anspruch 3 oder 4, **dadurch gekennzeichnet,** daß die Zahnstangen (3, 4) über ein Federblech (9) miteinander verbunden sind. 7. Verstellvorrichtung nach Anspruch 6 , **dadurch gekennzeichnet,** daß ein abgewinkeltes Ende (92) des Federbleches (9) an einer Außenkante (34) der festen Zahnstange (3) anliegt, die bewegliche Zahnstange (4) umgreift und mit seinem anderen Ende (93, 94) in eine Aussparung (43) der beweglichen Zahnstange (4) eingreift. 8. Verstellvorrichtung nach Anspruch 7 , **dadurch gekennzeichnet,** daß das Federblech (9) einen Federschenkel (91) aufweist, der eine Außenkante (44) der beweglichen Zahnstange (4) umgreift und im montierten Zustand des Federblechs (9) zwischen einer horizontalen und vertikalen Endlage in Bezug auf die Längserstreckung der Zahnstangen (3, 4) angeordnet ist. 9. Verstellvorrichtung nach einem der vorangehenden Ansprüche 6 bis 8, **dadurch gekennzeichnet,** daß die bewegliche Zahnstange (4) eine T-förmige Ausnehmung (43) aufweist, in die das zweifach abgewinkelte, der Ausnehmung (43) angepaßte Ende (93, 94) des Federblechs (9) eingreift. 10. Verstellvorrichtung nach einem der vorangehenden Ansprüche 6 bis 9, **dadurch gekennzeichnet,** daß der Federschenkel (31) trapezförmig erweitert ist. 11. Verstellvorrichtung nach einem der vorangehenden Ansprüche 1 bis 5 mit drei gegeneinander versetzten Zahnstangen, **dadurch gekennzeichnet,** daß mehrere in Längsrichtung der Zahnstangen (3, 4, 5) verteilt angeordnete Federelemente (61, 62, 63) vorgesehen sind, die die drei Zahnstangen (3, 4, 5) federelastisch gegeneinander verschieben. 12. Verstellvorrichtung nach Anspruch 11, **dadurch gekennzeichnet,** daß die Federelemente (61, 62, 63) aus gebogenen Blattfedern bestehen und in Aussparungen der Zahnstangen (3, 4, 5) eingreifen. 13. Verstellvorrichtung nach Anspruch 11 oder 12, **dadurch gekennzeichnet,** daß die mittlere Zahnstange (3) aus einer fest mit einer karosseriefesten Basis (1) verbundenen Zahnstange besteht, die über Langlochführungen gleitend mit den zu beiden Seiten der festen Zahnstange (3) angeordneten beweglichen Zahnstangen (4, 5) verbunden ist. 14. Verstellvorrichtung nach Anspruch 3 mit drei gegeneinander versetzten Zahnstangen, **dadurch gekennzeichnet,** daß an mindestens einem Ende der Zahnstangen (3, 4, 5) eine Blattfeder vorgesehen ist, die zwei zu beiden Seiten der festen Zahnstange (3) angeordnete bewegliche Zahnstangen (4, 5) federnd gegenüber der festen Zahnstange (3) abstützt.

## FIG.1

## FIG.2

## FIG.3

## FIG.4

## FIG.5

## FIG.6

## FIG.7

## FIG.8

9

FIG.9

FIG.10

FIG.11b      FIG.11a

FIG.11c